# EUROPEAN PATENT APPLICATION

(11) **EP 1 944 724 A1**
(43) Date of publication of application: **16.07.2008**
(21) Application number: 07000543.4
(22) Date of filing: 11.01.2007
(51) Int. Cl.: G06Q 10/00, G01C 21/34

(54) **Method for destination setting for a navigation system**

(71) Applicant: Harman Becker Automotive Systems GmbH, 76307 Karlsbad (DE)
(72) Inventor: Bauer, Lee, Grosse Pointe Farms, MI 48236 (US); Hennecke, Marcus, 89075 Ulm (DE); Hamerich, Stefan, 87093 Ulm (DE)
(74) Representative: Bertsch, Florian Oliver

(57) **Abstract**

A method for destination setting for a navigation system (1) of a vehicle is provided. The method comprises the steps of determining a future appointment from a schedule database (15), determining of a destination address of the appointment from an address database (17), setting of the determined destination address as a destination address for the navigation system (1), and determining of an estimated arrival time at the destination. The estimated arrival time is compared with the starting time of the appointment, and in case the estimated arrival time exceeds the starting time of the appointment, a communication connection to a person related to said appointment is set up.

## Description

The present invention relates to a method and a device for destination setting for a navigation system of a vehicle and especially to a method and a device for destination setting of a destination address according to an appointment determined from a schedule data base.

Entering a destination address into a navigation system is a time consuming and faulty prone procedure. Therefore, several attempts in the prior art have been made to ease the destination setting of a navigation system. Besides for example using a speech recognition system for entering the destination address, one of the most promising attempts is the coupling of a mobile device, which may be a mobile phone or a personal digital assistant, providing the destination address with the navigation system and setting the destination system in the navigation system simply by selecting a destination address of the database of the mobile device. Furthermore, in the prior art this method has been improved by involving furthermore a schedule database of the mobile device for determining and setting a destination address into a navigation system. With this improved method the user of a navigation system simply selects an appointment stored in the schedule database and the navigation system or the mobile device then automatically determines the destination address of the appointment directly from the schedule database or indirectly via a location of the appointment stored in the schedule database and an address of this location stored in an address database for setting the destination address in the navigation system. See for example EP 1 162 560 A2.

Although, as stated above, a rather comfortable destination setting for a navigation system is already achieved according to methods disclosed in the prior art, there are still improvements needed to support the user of the navigation system at the start or during traveling, if timelines of an appointment cannot be met.

Therefore, there is a need to provide a method and a device for destination setting for a navigation system providing a support to the user of the navigation system for monitoring, if the destination address can be reached in time and to support the user of the navigation system in case the destination address cannot be reached in time.

According to the present invention this need is met by a method for destination setting for a navigation system of a vehicle as defined in claim 1, a destination setting device for a navigation system for a vehicle as defined in claim 12, and a navigation system as defined in claim 25. The dependent claims define preferred and advantageous embodiments of the invention.

According to an aspect of the invention a method for a destination setting for a navigation system of a vehicle is provided. The method comprises a determining of a future appointment from a schedule database and a determining of a destination address of the appointment from an address database. After having determined the destination address of the appointment, according to the method the destination address is set as a destination address for the navigation system. The navigation system determines an estimated arrival time at the destination address by calculating a route from the present location to the destination address and estimating the required traveling time. Next, the estimated arrival time is compared with the starting time of the appointment, and in case, the estimated arrival time exceeds the starting time of the appointment, a communication connection to a person related to said appointment is set up.

By determining an estimated arrival time at the set destination address, taking into account for example information from a traffic message channel (TMC) and current road conditions, and comparing the estimated arrival time with the starting time of the appointment, the user of the navigation system can be informed well in advance of a delayed arrival. Furthermore, by setting up a communication connection to a person related to said appointment, it is possible to reschedule the appointment, to cancel the appointment or simply inform the person related to said appointment about an estimated delayed arrival. The setting up of a communication connection to the person related to the appointment may comprise a placing of a telephone call to the person enabling the user of the navigation system to reschedule or cancel the appointment or inform the partner of the delayed arrival. Additionally or as an alternative, the setting up of a communication connection may comprise a setting up of a data communication connection to a schedule database of the person related to the appointment or the person themselves, e.g. via e-mail, and automatically negotiate a new starting time of the appointment, the starting time is reachable within time, and adapting the schedule databases in accordance to the negotiation.

If during negotiation a new location for the appointment is decided, the new location can be set automatically as the new destination for the navigation system.

A method like this enables the user of the navigation system to be connected to the person related to the appointment by a telephone call without any further interaction of the user. Therefore, safety to traffic and the comfort in using the navigation system as a guiding help to an appointment is improved.

According to an embodiment of the invention, the setting up of a communication connection to the person related to the appointment is initiated only if the arrival time exceeds the starting time more than a predetermined amount of time. The additional feature of this embodiment enables the navigation system to be tolerant according to slight exceedings of the arrival time and therefore avoiding a reschedule or cancellation of an appointment due to a slight exceeding of the arrival time which would be tolerable for the user of the navigation system as defined by the predetermined amount of time.

According to another embodiment of the invention the user of the navigation system or the driver of the vehicle is informed about the changes made in the schedule database. The changes made in the schedule database may be due to an automatically rescheduled appointment as described before, or due to a manual reschedule of the user, for example due to the result of the telephone call with the person related to the appointment.

According to another aspect of the invention the method comprises, on detection that the estimated arrival time exceeds the starting time of the appointment, an outputting of a request to the user, if a communication connection to the person related to the appointment should be set up, and only in case of a positive confirmation, a communication connection to the person related to the appointment is set up. The output may comprise an output on a display of the navigation system or an acoustic output comprising spoken words via an acoustic output system of the vehicle. The confirmation or the disaffirmation of the user may be captured by a haptic system of the navigation system, for example buttons or a touch screen, or by an acoustic speech recognition system of the navigation system.

As many users might not feel very comfortable if a machine takes over control of their schedule, this embodiment provides a simple and effective way of involving the user in the rescheduling process without distracting the user from the traffic.

According to another embodiment of the present invention the navigation system provides a storage location for storing the schedule database and the address database containing appointment data and address data, respectively. A synchronization between the databases held in the navigation system and databases provided in a mobile device of the user of the navigation system may be performed as described below via, for example, a blue tooth communication or an electrical connection provided by a plug or a cradle connecting the mobile device with the navigation system. Synchronization may take place on entering the vehicle, i.e. when the user enters the vehicle carrying the mobile device with him and a wireless blue tooth connection is set up, or when the mobile device is connected physically with a plug or a cradle connected to the navigation system. Alternatively or in addition a synchronization may take place in regular intervals after a connection has been set up between the mobile device and the navigation system. Furthermore, a synchronization may take place on every change of any of the databases, as long as the mobile device and the navigation system are connected. Providing one or more of the above-mentioned mechanisms for synchronization ensures a proper synchronization ensuring that no appointment is missed and no schedule data and address data are getting lost.

As an alternative, the navigation system may not provide a storage location for storing the schedule database and the address database. In this case, the navigation system directly works on the databases provided in the mobile device via, for example, a blue tooth wireless connection or an electrical connection provided by a plug or a cradle between the mobile device and the navigation system.

As an alternative, the navigation system may or may not provide a storage location for storing the schedule data, but the necessary schedule data is available from a user defined remote site, e.g. web server, enterprise server, web schedule, and the navigation system works directly with the remote database.

Working directly on the databases provided in the mobile device or at remote net services eliminates the need for synchronization between databases and saves additionally cost for the storage location in the navigation system.

According to another embodiment of the invention the estimated arrival time at the destination is continuously determined and compared with the starting time of the appointment during traveling.

As the continuous determination of the estimated arrival time takes into account latest information about, for example, current road conditions and information of a traffic message channel, any changes of the estimated arrival time are immediately detected and a reaction of the system as described above for rescheduling the appointment or canceling the appointment or informing the person related to the appointment may be performed immediately.

According to another aspect of the invention a destination setting device for a navigation system for a vehicle is provided. The destination setting device comprises a schedule database access means for accessing a schedule database providing appointment information, and an address database access means for accessing an address database. Furthermore, the destination setting device comprises a control means which determines a future appointment from a schedule database and a destination address of the appointment from the address database using the schedule database access means and the address database access means, respectively. Furthermore, the destination setting device comprises an interface to the navigation system for setting a destination address for the navigation system and for receiving an estimated arrival time at the destination address from the navigation system, and a communication access means providing a communication to a mobile device. The control means sets the determined destination address as a destination address for the navigation system and requests an estimated arrival time at the destination from the navigation system. Next, the control means compares the estimated arrival time with a starting time of the appointment determined from the schedule database and, in case the estimated arrival time exceeds the starting time of the appointment, the control means sets up a communication connection to a person related to the appointment via the communication access means of the destination setting device.

According to another embodiment of the present invention the destination setting device comprises further a man machine interface for communicating with the user of the destination setting device. The man machine interface may be adapted to output requests to the user, for example via a display or an acoustic output comprising electronically synthesized speech, and an input for receiving instructions from the user, wherein the input may be accomplished by for example buttons, a touch screen or a microphone combined with a speech recognition device for receiving and interpreting spoken language or words from the user.

The destination setting device as described above is adapted to perform the method for a destination setting as described above and has therefore the same advantages and benefits as the above-described embodiments of the method.

Finally, a navigation system is provided incorporating the destination setting device. This enables the destination setting device to use several components already provided by the navigation system, for example input and output devices, for example a display, a microphone or a loudspeaker, or a processing unit accomplishing the functions of the control means. Therefore, incorporating the destination setting device in the navigation system may reduce the cost essentially.

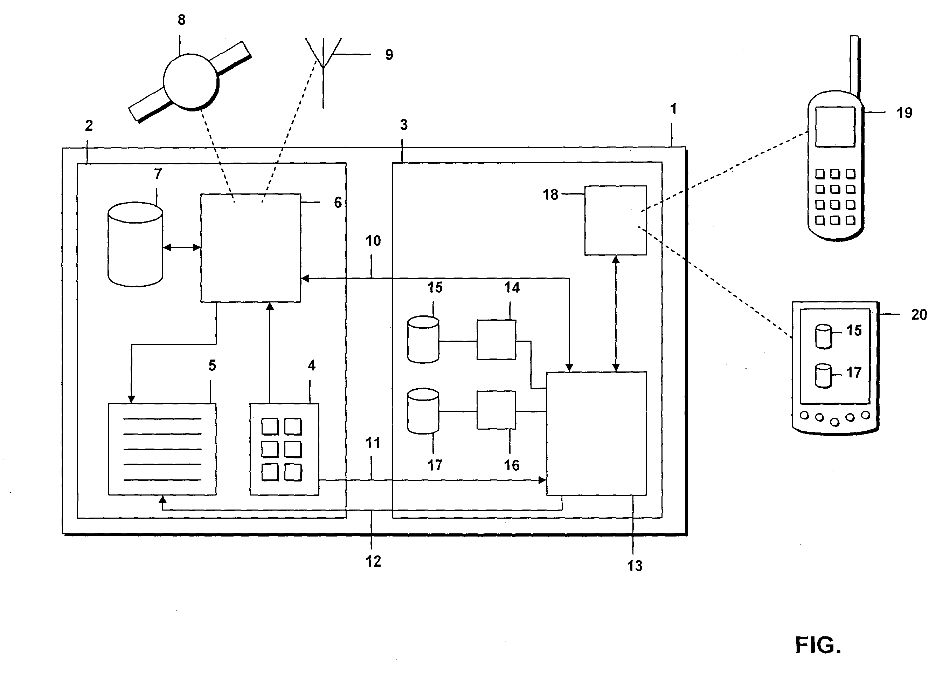

The invention will now be described in more detail with reference to the accompanying drawing, in which the Figure shows a schematic view of a destination setting device of the invention incorporated in a navigation system of a vehicle.

The Figure shows a schematic view of a navigation system 1 for a vehicle comprising a navigation device 2 and a destination setting device 3. The navigation device 2 is rather similar to a conventional navigation system and comprises input means 4, for example a keyboard or buttons or a speech recognition system, output means 5, for example a display or a speech output system, a navigation control unit 6, and a navigation database 7. As in a conventional navigation system the navigation control unit 6 is adapted to determine a current position of the vehicle for example with the help of a satellite-based global positioning system, wherein the position of the vehicle can be retrieved from signals received from several satellites 8. Furthermore, the navigation control unit is adapted for receiving a destination address via the input means 4 and the output means 5 from a user of the navigation system, and calculating based on the current position, the destination address, and the navigation database 7 a route to the destination address, and is furthermore adapted to output navigation information to the user via the output means 5. Additionally, the navigation control unit 6 is adapted to calculate based on the current time received, for example from the satellite or an internal clock of the vehicle, an estimated arrival time at the destination address. As the arrival time may depend on traffic conditions, for example congestions or road works, the navigation control unit 6 takes into account information about road conditions received via a traffic message channel from radio broadcast 9.

The navigation system 1 additionally comprises the destination setting device 3 which is connected via a first connection 10 to the navigation control unit 6 for setting a destination address and for requesting an estimated arrival time at the destination address, via a second connection 11 to the input means 4 of the navigation device 2 for receiving information from the user of the navigation system 1, and via a third connection 12 to the output means 5 of the navigation device 2 for outputting information to the user of the navigation system 1. The destination setting device further comprises a control means 13 connected to a schedule database access means 14 connected to a schedule database 15 and an address database access means 16 connected to an address database 17. Furthermore, the destination setting device 3 comprises a communication access means 18 connected to the control means 13. The communication access means 18 is adapted to provide a communication to a mobile device, for example a mobile phone 19 or a personal digital assistant 20. Communication between the communication access means 18 and the mobile device may be wireless via for example a blue tooth connection or via an electrical connection, wherein the mobile device is connected to the communication access means 18 via a special plug or a cradle.

In the following description several embodiments of the operation of the destination setting device 3 will be described in more detail.

In a database of a mobile device, for example a mobile phone 19 or a personal digital assistant (PDA) 20 are stored appointments and addresses. The appointments may already contain addresses also, or just a name of the organizer of the appointment or a name of the company where the appointment takes place and the address of the organizer or the address of the location of the company may be stored in a separate database for addresses. When a user of the mobile device 19, 20 enters a vehicle provided with the navigation system 1 comprising the destination setting device 3, there may be for example automatically be established a communication between the mobile device 19, 20 and the communication access means 18. Additionally or as an alternative, the user of the mobile device 19, 20 may insert the mobile device into a cradle connected with the communication access means 18 of the destination setting device 3.

After the connection between the mobile device 19, 20 and the communication access means 18 has been established, the schedule database of the mobile device is synchronized with the schedule database 15 of the destination setting device 3 and the address database of the mobile device 19, 20 is synchronized with the address database 17 of the destination setting device 3. After the databases have been synchronized, the control means 13 of the destination setting device 3 checks the schedule database 15 for future appointments lying in the near future, for example within the next ten hours. If one or more appointments within this time range are found in the schedule database, the control means selects the chronological next appointment and extracts the destination address from this appointment either from the address data stored within the appointment information or indirectly via the address of the company's name or the name of the organizer or attendee of appointment with the help of the address database.

After having determined the destination address, the control means may inquire the user of the vehicle via the input and output means 4, 5 if the determined destination address should be set as the destination address for the navigation system 1. This enquiry may be accomplished via a speech input and output or an output on a display and an input via a touch screen or buttons of the navigation system 1 or a combination of the above-mentioned means. Alternatively, the enquiry may be omitted if the navigation system 1 is configured correspondently and it is assumed that the setting of the destination address is wanted without explicit confirmation of the user.

Upon a positive confirmation, either via assumption or via explicit user acknowledgement, the determined destination address is set from the control means 13 of the destination setting device 3 via the first connection 10 as the destination address for the navigation device 2 in the navigation control unit 6. The navigation control unit 6 then calculates an estimated arrival time at the destination based on map information of a navigation database 7, the current location of the vehicle determined with the help of a global positioning system and positioning information from satellites 8, and taking into account current road conditions determined from a traffic message channel received from a radio broadcast station 9. The estimated arrival time at the destination is then communicated via the first connection 10 to the control means 13. The control means 13 may then output the facts of the set destination address and the estimated arrival time via output means 5 to the user of the navigation system 1.

Then, the control means 13 compares the estimated arrival time at the destination with the starting time of the appointment. In case the estimated arrival time exceeds the starting time of the appointment the control means 13 provides an output to the user of the navigation system 1 via the output means 5 informing the user about the fact that the appointment cannot be reached in time and proposes to place a call to the organizer of the appointment or to an attendee of the appointment.

Upon a positive confirmation of the user of the navigation system 1, the control means 13 determines connection information to contact the organizer or the attendee of the appointment and sets up a communication connection via the communication access means 18 and the mobile phone 19 to the organizer or the attendee of the appointment. Additionally, the control means 13 provides the user the estimated arrival time, so that the user knows the point of time of the earliest arrival for negotiating a new starting time of the appointment. After the phone call is completed, the control means 13 requests the user via the input and output means 4, 5 how to proceed with the appointment which cannot be reached within time. The control means 13 may suggest several alternatives, for example canceling the meeting, shifting the appointment to a new starting time corresponding to the estimated arrival time at the destination, shifting the appointment to a new starting time determined by the user, or changing the location of the appointment. This request for getting the information how to proceed with the appointment, may be accomplished via speech input and output or via using a display, a touch screen, or buttons of the navigation system 1. As a result, the appointment is either cancelled or provided with a new starting time or location and the schedule database 15 is updated accordingly via the database access means 14 by the control means 13.

As an alternative, the control means 13 may contact via the communication access means 18 and the mobile phone 19 a schedule database of the organizer or the attendee of the appointment which cannot be reached within time, and electronically negotiate a new starting time of this appointment. After a successful negotiation and shifting the appointment to a later time, which can be reached within time, this result is prompted via the output means 5 to the user of the navigation system 1.

In case a new location is selected for the appointment, the new location is set as the new destination address for the navigation system as described above.

Furthermore, the control means 13 may take into account several appointments that occur during the next for example ten hours, and may calculate a route according to the appointment locations as described above and may check if all the appointments can be reached within time. If it is not possible, the control means 13 may try to find another order of the appointments, in which new order the appointments could be reached in time, for example by solving the traveling salesman problem, and, in case a better solution can be found, informs the user of the navigation system 1 about the problem found and possible solutions and requests the user to select one of the proposed solutions, to rearrange the appointments on his own, or to leave the schedule as it is. Upon selection of one of the proposed solutions, the control means 13 may set up communication connections to the organizer or attendee of the appointments as described above, or automatically sets up data communication connections to the data schedules of the organizer or attendees for shifting the appointments.

Whenever any changes have occurred in the schedule database 15, these changes are synchronized with the database of the mobile device 19, 20. As an alternative, these synchronization updates may be performed on a regular base, for example every ten minutes.

In case the control means 13 sets a new destination at the navigation control unit 6 of the navigation device 2, and the estimated arrival time received from the navigation control unit 6 does not exceed the starting time of the appointment the destination address was derived from, the control means 13 still monitors in regular terms, for example every five or ten minutes, the estimated arrival time at the destination during traveling, as due to updates from the traffic message channel received from the radio broadcast 9 or due to unexpected stops or unexpected slow driving the control means 13 may detect during traveling that the starting time of the appointment cannot be reached in time. In this case, the same procedure as described above will be initiated informing the user that the appointment cannot be reached in time and the appointment has to be shifted.

In the Figure, the schedule database 15 and the address database 17 which are accessed via the schedule database access means 14 and the address database access means 16, respectively, are shown as part of the destination setting device 3. However, it is possible to locate the schedule database 15 and the address database 17 anywhere else, as long as the schedule database access means 14 and the address database access means 16 have access to the respective databases. Therefore, the schedule database 15 and the address database 17 may also be located in the navigation device 2. Furthermore, the schedule database and the address database may be located only in the mobile device 19, 20 and the schedule database access means 14 and the address database access means 16 have to access the schedule database 15 and the address database 17, respectively, via the communication access means 18. In the latter case no synchronization between databases located in the mobile devices 19, 20 and databases located in the navigation system 1 has to be performed, as there are no databases concerning schedule and address information in the navigation system 1. On the other hand, this requires fast and powerful communication between the destination setting device 3 and the mobile device 19, 20.

Finally, in the Figure the destination setting device 3 is shown as a part of the navigation system 1. This is a very advantageous embodiment as for example the input and output means 4, 5 can be used by the navigation device 2 and the destination setting device 3 in common, but the navigation setting device 3 may also be implemented as single device connected to a conventional navigation system, if the navigation system provides the interfaces for setting the destination address and requesting the estimated arrival time at the destination, which is realized via the first connection 10 in the embodiment shown in the Figure. The destination setting device 3 may then comprise additionally own input and output means for a communication with the user, or may also as described above use the input means 4 and the output means 5 of the navigation system, if the navigation provides appropriate interfaces for connecting the destination setting device, wherein these interfaces should provide the communication realized with the second connection 11 and the third connection 12 of the embodiment disclosed above.

## Claims

1. A method for destination setting for a navigation system (1) of a vehicle, the method comprising the following steps:
- determining a future appointment from a schedule database (15),
- determining a destination address of the appointment from an address database (17),
- setting of the determined destination address as a destination address for the navigation system (1),
- determining an estimated arrival time at the destination,
- comparing the estimated arrival time with a starting time of the appointment,
and in case, the estimated arrival time exceeds the starting time of the appointment:
setting up a communication connection to a person related to said appointment.

2. The method according to claim 1, wherein setting up a communication connection to a person related to said appointment comprises placing a telephone call to the person related to said appointment.

3. The method according to claim 1 or 2, wherein setting up a communication connection to a person related to said appointment comprises setting up a data communication connection to a schedule database of said person related to said appointment and automatically negotiating a new starting time of the appointment and adapting the schedule databases (15) in accordance to the negotiation.

4. The method according to any of the proceeding claims, wherein the setting up of a communication connection to a person related to said appointment is initiated only, if the arrival time exceeds the starting time for more than a predetermined amount of time.

5. The method according to any of the proceeding claims, further comprising the step of canceling the appointment and adapting the schedule database accordingly.

6. The method according to any of the proceeding claims, further comprising the step of informing the driver of the vehicle about the changes made in the schedule database.

7. The method according to any of the proceeding claims, further comprising synchronizing the schedule database (15) and the address database (17) with a schedule database (15) and an address database (17) of a mobile device (19, 20) upon connecting the mobile device (19, 20) to the navigation system (1).

8. The method according to any of the proceeding claims, further comprising synchronizing the schedule database (15) and the address database (17) with a schedule database (15) and an address database (17) of a mobile device (19, 20) in predetermined intervals.

9. The method according to any of the proceeding claims, further comprising synchronizing the schedule database (15) and the address database (17) with a schedule database (15) and an address database (17) of a mobile device (19, 20) on every change of any of the databases (15, 17).

10. The method according to any of the proceeding claims, wherein, upon detection that the estimated arrival time exceeds the starting time of the appointment, the navigation system (1) outputs a request to a user, if a communication connection to a person related to said appointment should be set up, and only in case of a positive confirmation, a communication connection to said person related to said appointment is set up.

11. The method according to any of the proceeding claims, wherein determining an estimated arrival time at the destination and comparing the estimated arrival time with a starting time of the appointment is performed continuously during traveling.

12. A destination setting device (3) for a navigation system (1) for a vehicle, comprising:
- schedule database access means (14) for accessing a schedule database (15) providing appointment information,
- address database access means (16) for accessing an address database (17),
- communication access means (18) providing a communication to a mobile device (19, 20),
- an interface (10) to the navigation system (1) for setting a destination address for the navigation system (1) and for requesting from the navigation system (1) an estimated arrival time at the destination address,
- control means (13) determining a future appointment from a schedule database (15), determining a destination address of the appointment, setting the determined destination address as the destination address for the navigation system (1), requesting from the navigation system (1) an estimated arrival time at the destination, comparing the estimated arrival time with a starting time of the appointment, and, in case, the estimated arrival time exceeds the starting time of the appointment, setting up a communication connection to a person related to said appointment via the communication access means (18) of the destination setting device (3).

13. The destination setting device (3) according to claim 12, wherein setting up a communication connection to a person related to said appointment comprises placing a telephone call to the person related to said appointment via a mobile cell phone (19) connected to the destination setting device(3).

14. The destination setting device (3) according to claim 12 or 13, wherein setting up a communication connection to a person related to said appointment comprises setting up a data communication connection to a schedule database (15) of said person related to said appointment and automatically negotiating a new starting time of the appointment and adapting the schedule databases (15) in accordance to the negotiation.

15. The destination setting device (3) according to any of claims 12 to 14, wherein the setting up of a communication connection to a person related to said appointment is initiated only, if the arrival time exceeds the starting time for more than a predetermined amount of time.

16. The destination setting device (3) according to any of claims 12 to 15, wherein the control means (9) is further adapted to cancel the appointment and adapt the schedule database (15) accordingly.

17. The destination setting device (3) according to any of claims 12 to 16, wherein the destination setting device (3) comprises further a man machine interface (4, 5) and the control means (13) is further adapted to inform the driver of the vehicle about the changes made in the schedule database via the man machine interface (4, 5).

18. The destination setting device (3) according to any of claims 12 to 17, wherein the control means (13) is further adapted to synchronize the schedule database (15) and the address database (17) with a schedule database (15) and an address database (17) of a mobile device (19, 20), upon connecting the mobile device (19, 20) to the navigation system (1).

19. The destination setting device (3) according to any of claims 12 to 18, wherein the control means (9) is further adapted to synchronize the schedule database (15) and the address database (17) with a schedule database (15) and an address database (17) of a mobile device (19, 20) in predetermined intervals.

20. The destination setting device (3) according to any of claims 12 to 19, wherein the control means (13) is further adapted to synchronize the schedule database (15) and the address database (17) with a schedule database (15) and an address database (17) of a mobile device (19, 20) on every change of any of the databases (15, 17).

21. The destination setting device (3) according to any of claims 12 to 20, wherein the control means (13) is further adapted to determine future appointments from a schedule database located in the mobile device (19, 20).

22. The destination setting device (3) according to any of claims 12 to 21, wherein the control means (13) is further adapted to determine future appointments from a schedule database located in a remote site, providing access to the remote site via the mobile device (19, 20).

23. The destination setting device (3) according to any of claims 12 to 22, wherein the destination setting device (3) comprises further a man machine interface (4, 5) and the control means (13) is further adapted, upon detection that the estimated arrival time exceeds the starting time of the appointment, to output a request to a user, if a communication connection to said person related to said appointment should be set up, and only in case of a positive confirmation, to set up the communication connection to said person related to said appointment.

24. The destination setting device (3) according to any of claims 12 to 23, wherein the control means (13) is further adapted to perform continuously during traveling the determining of the estimated arrival time at the destination and the comparing of the estimated arrival time with a starting time of the appointment.

25. A navigation system (1) for a vehicle comprising the destination setting device (3) according to any of claims 12 to 24.

## Amended claims

### Amended claims in accordance with Rule 137(2) EPC.

**1.** A method for destination setting for a navigation system (1) of a vehicle, the method comprising the following steps:
- determining a future appointment from a schedule database (15),
- determining a destination address of the appointment from an address database (17),
- setting of the determined destination address as a destination address for the navigation system (1),
- determining a present location of the vehicle,
- calculating a route from the present location to the destination address,
- determining an estimated arrival time at the destination,
- comparing the estimated arrival time with a starting time of the appointment,
and in case, the estimated arrival time exceeds the starting time of the appointment:
setting up a communication connection to a person related to said appointment,
**characterized by**
- synchronizing the schedule database (15) and the address database (17) of the navigation system (1) with a schedule database (15) and an address database (17) of a mobile device (19, 20).

**2.** The method according to claim 1, wherein setting up a communication connection to a person related to said appointment comprises placing a telephone call to the person related to said appointment.

**3.** The method according to claim 1 or 2, wherein setting up a communication connection to a person related to said appointment comprises setting up a data communication connection to a schedule database of said person related to said appointment and automatically negotiating a new starting time of the appointment and adapting the schedule databases (15) in accordance to the negotiation.

**4.** The method according to any of the preceding claims, wherein the setting up of a communication connection to a person related to said appointment is initiated only, if the arrival time exceeds the starting time for more than a predetermined amount of time.

**5.** The method according to any of the preceding claims, further comprising the step of canceling the appointment and adapting the schedule database accordingly.

**6.** The method according to any of the preceding claims, further comprising the step of informing the driver of the vehicle about the changes made in the schedule database.

**7.** The method according to any of the preceding claims, further comprising synchronizing the schedule database (15) and the address database (17) with a schedule database (15) and an address database (17) of a mobile device (19, 20) upon connecting the mobile device (19, 20) to the navigation system (1).

**8.** The method according to any of the preceding claims, further comprising synchronizing the schedule database (15) and the address database (17) with a schedule database (15) and an address database (17) of a mobile device (19, 20) in predetermined intervals.

**9.** The method according to any of the preceding claims, further comprising synchronizing the schedule database (15) and the address database (17) with a schedule database (15) and an address database (17) of a mobile device (19, 20) on every change of any of the databases (15, 17).

**10.** The method according to any of the preceding claims, wherein, upon detection that the estimated arrival time exceeds the starting time of the appointment, the navigation system (1) outputs a request to a user, if a communication connection to a person related to said appointment should be set up, and only in case of a positive confirmation, a communication connection to said person related to said appointment is set up.

**11.** The method according to any of the preceding claims, wherein determining an estimated arrival time at the destination and comparing the estimated arrival time with a starting time of the appointment is performed continuously during traveling.

**12.** A destination setting device (3) for a navigation system (1) for a vehicle, comprising:
- schedule database access means (14) for accessing a schedule database (15) providing appointment information,
- address database access means (16) for accessing an address database (17),
- communication access means (18) providing a communication to a mobile device (19, 20),
- an interface (10) to the navigation system (1) for setting a destination address for the navigation system (1) and for requesting from the navigation system (1) an estimated arrival time at the destination address,
- control means (13) determining a future appointment from a schedule database (15), determining a destination address of the appointment from the address database (17), setting the determined destination address as the destination address for the navigation system (1), requesting from the navigation system (1) an estimated arrival time at the destination, comparing the estimated arrival time with a starting time of the appointment, and, in case, the estimated arrival time exceeds the starting time of the appointment, setting up a communication connection to a person related to said appointment via the communication access means (18) of the destination setting device (3),
wherein the navigation system (1) determines the estimated arrival time at the destination by calculating a route from the present location of the vehicle determined by the navigation system (1) to the destination and estimating the required traveling time,
**characterized in that**
the control means (13) is further adapted to synchronize the schedule database (15) and the address database (17) of the destination setting device (3) with a schedule database (15) and an address database (17) of a mobile device (19, 20).

**13.** The destination setting device (3) according to claim 12, wherein setting up a communication connection to a person related to said appointment comprises placing a telephone call to the person related to said appointment via a mobile cell phone (19) connected to the destination setting device(3).

**14.** The destination setting device (3) according to claim 12 or 13, wherein setting up a communication connection to a person related to said appointment comprises setting up a data communication connection to a schedule database (15) of said person related to said appointment and automatically negotiating a new starting time of the appointment and adapting the schedule databases (15) in accordance to the negotiation.

**15.** The destination setting device (3) according to any of claims 12 to 14, wherein the setting up of a communication connection to a person related to said appointment is initiated only, if the arrival time exceeds the starting time for more than a predetermined amount of time.

**16.** The destination setting device (3) according to any of claims 12 to 15, wherein the control means (9) is further adapted to cancel the appointment and adapt the schedule database (15) accordingly.

**17.** The destination setting device (3) according to any of claims 12 to 16, wherein the destination setting device (3) comprises further a man machine interface (4, 5) and the control means (13) is further adapted to inform the driver of the vehicle about the changes made in the schedule database via the man machine interface (4, 5).

**18.** The destination setting device (3) according to any of claims 12 to 17, wherein the control means (13) is further adapted to synchronize the schedule database (15) and the address database (17) with a schedule database (15) and an address database (17) of a mobile device (19, 20), upon connecting the mobile device (19, 20) to the navigation system (1).

**19.** The destination setting device (3) according to any of claims 12 to 18, wherein the control means (9) is further adapted to synchronize the schedule database (15) and the address database (17) with a schedule database (15) and an address database (17) of a mobile device (19, 20) in predetermined intervals.

**20.** The destination setting device (3) according to any of claims 12 to 19, wherein the control means (13) is further adapted to synchronize the schedule database (15) and the address database (17) with a schedule database (15) and an address database (17) of a mobile device (19, 20) on every change of any of the databases (15, 17).

**21.** The destination setting device (3) according to any of claims 12 to 20, wherein the control means (13) is further adapted to determine future appointments from a schedule database located in the mobile device (19, 20).

**22.** The destination setting device (3) according to any of claims 12 to 21, wherein the control means (13) is further adapted to determine future appointments from a schedule database located in a remote site, providing access to the remote site via the mobile device (19, 20).

**23.** The destination setting device (3) according to any of claims 12 to 22, wherein the destination setting device (3) comprises further a man machine interface (4, 5) and the control means (13) is further adapted, upon detection that the estimated arrival time exceeds the starting time of the appointment, to output a request to a user, if a communication connection to said person related to said appointment should be set up, and only in case of a positive confirmation, to set up the communication connection to said person related to said appointment.

**24.** The destination setting device (3) according to any of claims 12 to 23, wherein the control means (13) is further adapted to perform continuously during traveling the determining of the estimated arrival time at the destination and the comparing of the estimated arrival time with a starting time of the appointment.

**25.** A navigation system (1) for a vehicle comprising the destination setting device (3) according to any of claims 12 to 24.
